# DEMANDE DE BREVET EUROPEEN

(11) **EP 4 497 360 A1**
(43) Date de publication de la demande: **29.01.2025**
(21) Numéro de dépôt: 24189976.4
(22) Date de dépôt: 22.07.2024
(51) Int. Cl.: A47L 5/36, A47L 9/24, F16L 27/00, F16L 33/00, F16L 37/098

(54) **CONDUIT FLEXIBLE POURVU D'UN ERGOT DE VERROUILLAGE**

(30) Priorité: 26.07.2023 FR 2308052
(71) Demandeur: SEB S.A., 69130 Ecully (FR)
(72) Inventeur: PHILIPPE, Christelle, 69134 ECULLY CEDEX (FR); GARO, Youenn, 69134 ECULLY CEDEX (FR); VIVIER, Jean Damien, 69134 ECULLY CEDEX (FR)
(74) Mandataire: Germain Maureau

(57) **Abrégé**

Le conduit flexible (15) est configuré pour relier des première et deuxième parties de conduit rigides (7, 8) d'un conduit d'aspirateur (5), et comporte une première bague de fixation (21) comportant un premier dispositif de verrouillage (23) configuré pour verrouiller, de manière réversible, la première bague de fixation (21) sur la première partie de conduit rigide (7), et une deuxième bague de fixation (22) comportant un deuxième dispositif de verrouillage (24) configuré pour verrouiller, de manière réversible, la deuxième bague de fixation (22) sur la deuxième partie de conduit rigide (8). Le premier dispositif de verrouillage (23) comprend un premier ergot de verrouillage (26) qui s'étend vers l'extérieur du conduit flexible (15) et qui est pourvu d'une première surface de préhension (26.1), et le deuxième dispositif de verrouillage (24) comprend un deuxième ergot de verrouillage (28) qui s'étend vers l'extérieur du conduit flexible (15) et qui est pourvu d'une deuxième surface de préhension (28.1).

## Description

### Domaine technique

La présente invention concerne le domaine des conduits flexibles pour aspirateur, et en particulier des aspirateurs équipés de tels conduits flexibles.

### Etat de la technique

Un aspirateur comprend de façon connue un boîtier d'aspirateur équipé d'une unité d'aspiration, un suceur configuré pour être en contact avec un sol à nettoyer, et un conduit d'aspirateur reliant fluidiquement et mécaniquement le boîtier d'aspirateur au suceur et définissant un passage d'écoulement d'air.

Afin de faciliter le rangement de l'aspirateur ou un nettoyage avec l'aspirateur sous des meubles, le conduit d'aspirateur comprend avantageusement :
- une première partie de conduit rigide et une deuxième partie de conduit rigide,
- un conduit flexible reliant les première et deuxième parties de conduit rigides et définissant au moins partiellement le passage d'écoulement d'air, le conduit flexible comportant une partie tubulaire flexible, une première bague de fixation qui est fixée à une première portion d'extrémité de la partie tubulaire flexible et qui est fixée de manière inamovible à la première partie de conduit rigide, et une deuxième bague de fixation qui est fixée à une deuxième portion d'extrémité de la partie tubulaire flexible et qui est fixée de manière inamovible à la deuxième partie de conduit rigide,
- un dispositif d'articulation reliant les première et deuxième parties de conduit rigides entre elles, le dispositif d'articulation comportant un axe d'articulation et étant configuré pour permettre un pivotement de la première partie de conduit rigide par rapport à la deuxième partie de conduit rigide autour de l'axe d'articulation et entre une configuration dépliée dans laquelle les première et deuxième parties de conduit rigides sont sensiblement alignées l'une par rapport à l'autre et une configuration pliée dans laquelle les première et deuxième parties de conduit rigides définissent entre elles un angle inférieur à 180°, et
- un organe de verrouillage configuré pour verrouiller, de manière réversible, les première et deuxième parties de conduit rigides dans la configuration dépliée.

Lors de l'utilisation d'un tel conduit d'aspirateur, des déchets, aspirés depuis un suceur raccordé au conduit flexible, sont susceptibles de s'accumuler, voire de se coincer, dans la partie tubulaire flexible du conduit flexible, ce qui peut conduire à une obstruction partielle ou totale de la partie tubulaire flexible. Or, la partie tubulaire flexible étant difficilement accessible depuis l'extrémité du conduit d'aspirateur reliée au suceur et également depuis l'extrémité du conduit d'aspirateur reliée au boîtier d'aspirateur, une obstruction de la partie tubulaire flexible peut rendre totalement inopérant le conduit d'aspirateur.

De même, en cas d'endommagement de la partie tubulaire flexible, tel qu'une rupture partielle, en raison de déplacements répétés des première et deuxième parties de conduit rigides entre les configurations dépliée et pliée, les performances de nettoyage du conduit d'aspirateur sont fortement dégradées.

### Résumé de l'invention

La présente invention vise à remédier à tout ou partie de ces inconvénients.

Le problème technique à la base de l'invention consiste notamment à fournir un conduit flexible qui soit de structure simple, tout en permettant de conférer une fiabilité et une ergonomie accrues à un conduit d'aspirateur équipé d'un tel conduit flexible.

A cet effet, la présente invention concerne un conduit flexible définissant au moins partiellement un passage d'écoulement d'air et configuré pour relier une première partie de conduit rigide et une deuxième partie de conduit rigide d'un conduit d'aspirateur, le conduit flexible comportant :
- une partie tubulaire flexible,
- une première bague de fixation fixée à une première portion d'extrémité de la partie tubulaire flexible et configurée pour être fixée de manière amovible à la première partie de conduit rigide,
- une deuxième bague de fixation fixée à une deuxième portion d'extrémité de la partie tubulaire flexible et configurée pour être fixée de manière amovible à la deuxième partie de conduit rigide,

la première bague de fixation comporte un premier dispositif de verrouillage configuré pour verrouiller, de manière réversible, la première bague de fixation sur la première partie de conduit rigide, et la deuxième bague de fixation comporte un deuxième dispositif de verrouillage configuré pour verrouiller, de manière réversible, la deuxième bague de fixation sur la deuxième partie de conduit rigide,
le premier dispositif de verrouillage comprend au moins un premier ergot de verrouillage qui s'étend vers l'extérieur du conduit flexible et qui est pourvu d'une première surface de préhension apte à être contactée par un doigt d'un utilisateur, et le deuxième dispositif de verrouillage comprend au moins un deuxième ergot de verrouillage qui s'étend vers l'extérieur du conduit flexible et qui est pourvu d'une deuxième surface de préhension apte à être contactée par un doigt de l'utilisateur.

Une telle configuration du conduit flexible permet un démontage aisé de ce dernier, par rapport aux première et deuxième parties de conduit rigides d'un conduit d'aspirateur équipé d'un tel conduit flexible, notamment en vue de nettoyer le conduit flexible, de retirer des gros déchets coincés dans le conduit flexible ou encore de le remplacer en cas d'endommagement.

Ainsi, le conduit flexible selon la présente invention permet de conférer une fiabilité et une ergonomie accrues à un conduit d'aspirateur équipé d'un tel conduit flexible.

Le conduit flexible peut en outre présenter une ou plusieurs des caractéristiques suivantes, prises seules ou en combinaison.

Selon un mode de réalisation de l'invention, l'au moins un premier ergot de verrouillage s'étend radialement vers l'extérieur par rapport à un axe central du conduit flexible, et l'au moins un deuxième ergot de verrouillage s'étend radialement vers l'extérieur par rapport à l'axe central du conduit flexible.

Selon un mode de réalisation de l'invention, chacun de l'au moins un premier ergot de verrouillage et de l'au moins un deuxième ergot de verrouillage est situé sur un côté latéral du conduit flexible. En d'autres termes, l'au moins un premier ergot de verrouillage est un premier ergot de verrouillage latéral, et l'au moins un deuxième ergot de verrouillage est un deuxième ergot de verrouillage latéral.

Selon un mode de réalisation de l'invention, chacune des première et deuxième surfaces de préhension est orientée vers l'extérieur du conduit flexible.

Selon un mode de réalisation de l'invention, chacune des première et deuxième surfaces de préhension a une aire comprise entre 25 mm² et 600 mm², de préférence entre 50 mm² et 200 mm².

Selon un mode de réalisation de l'invention, la première bague de fixation comporte un premier corps de bague annulaire et le premier dispositif de verrouillage comprend au moins une première patte élastiquement déformable qui s'étend depuis le premier corps de bague annulaire en direction de la deuxième bague de fixation, et la deuxième bague de fixation comporte un deuxième corps de bague annulaire et le deuxième dispositif de verrouillage comprend au moins une deuxième patte élastiquement déformable qui s'étend depuis le deuxième corps de bague annulaire en direction de la première bague de fixation, dans lequel l'au moins un premier ergot de verrouillage s'étend depuis une extrémité libre de l'au moins une première patte élastiquement déformable et l'au moins un deuxième ergot de verrouillage s'étend depuis une extrémité libre de l'au moins une deuxième patte élastiquement déformable.

Selon un mode de réalisation de l'invention, chacune de l'au moins une première patte élastiquement déformable et de l'au moins une deuxième patte élastiquement déformable s'étend selon une direction d'extension qui est sensiblement parallèle à l'axe central du conduit flexible.

Selon un mode de réalisation de l'invention, le premier dispositif de verrouillage comprend deux premières pattes élastiquement déformables qui s'étendent depuis le premier corps de bague annulaire et deux premiers ergots de verrouillage qui s'étendent respectivement depuis les extrémités libres des deux premières pattes élastiquement déformables, et le deuxième dispositif de verrouillage comprend deux deuxièmes pattes élastiquement déformables qui s'étendent depuis le deuxième corps de bague annulaire et deux deuxièmes ergots de verrouillage qui s'étendent respectivement depuis les extrémités libres des deux deuxièmes pattes élastiquement déformables.

Selon un mode de réalisation de l'invention, les deux premiers ergots de verrouillage sont diamétralement opposés par rapport à un axe central du conduit flexible, et les deux deuxièmes ergots de verrouillage sont diamétralement opposés par rapport à l'axe central du conduit flexible. De façon avantageuse, les premières surfaces de préhension des deux premiers ergots de verrouillage, diamétralement opposés, forment une pince saisissable par exemple entre l'index et le pousse d'un utilisateur, et les deuxièmes surfaces de préhension des deux deuxièmes ergots de verrouillage, diamétralement opposés, forment une pince saisissable par exemple entre l'index et le pousse d'un utilisateur.

Selon un mode de réalisation de l'invention, chacun des premiers et deuxièmes ergots de verrouillage est disposé le long d'une surface externe de la partie tubulaire flexible.

Selon un mode de réalisation de l'invention, le conduit flexible comporte un premier joint d'étanchéité annulaire fixé à la première bague de fixation et configuré pour coopérer de manière étanche avec la première partie de conduit rigide, et un deuxième joint d'étanchéité annulaire fixé à la deuxième bague de fixation et configuré pour coopérer de manière étanche avec la deuxième partie de conduit rigide.

La présente invention concerne en outre un conduit d'aspirateur définissant un passage d'écoulement d'air et comprenant :
- une première partie de conduit rigide et une deuxième partie de conduit rigide,
- un conduit flexible selon l'invention,
- un dispositif d'articulation reliant les première et deuxième parties de conduit rigides entre elles, le dispositif d'articulation comportant un axe d'articulation et étant configuré pour permettre un pivotement de la première partie de conduit rigide par rapport à la deuxième partie de conduit rigide autour de l'axe d'articulation et entre une configuration dépliée dans laquelle les première et deuxième parties de conduit rigides sont sensiblement alignées l'une par rapport à l'autre et une configuration pliée dans laquelle les première et deuxième parties de conduit rigides (7, 8) définissent entre elles un angle inférieur à 180°,
- un organe de verrouillage configuré pour verrouiller, de manière réversible, les première et deuxième parties de conduit rigides dans la configuration dépliée,
dans lequel la première bague de fixation est configurée pour être fixée de manière amovible à la première partie de conduit rigide, et la deuxième bague de fixation est configurée pour être fixée de manière amovible à la deuxième partie de conduit rigide.

Selon un mode de réalisation de l'invention, l'au moins un premier ergot de verrouillage est mobile entre une configuration de verrouillage dans laquelle l'au moins un premier ergot de verrouillage est configuré pour coopérer avec la première partie de conduit rigide de manière à verrouiller la première bague de fixation sur la première partie de conduit rigide, et une configuration de déverrouillage dans lequel l'au moins un premier ergot de verrouillage est configuré pour libérer la première partie de conduit rigide de manière à autoriser un retrait de la première bague de fixation hors de la première partie de conduit rigide, et dans lequel l'au moins un deuxième ergot de verrouillage est mobile entre une configuration de verrouillage dans laquelle l'au moins un deuxième ergot de verrouillage est configuré pour coopérer avec la deuxième partie de conduit rigide de manière à verrouiller la deuxième bague de fixation sur la deuxième partie de conduit rigide, et une configuration de déverrouillage dans lequel l'au moins un deuxième ergot de verrouillage est configuré pour libérer la deuxième partie de conduit rigide de manière à autoriser un retrait de la deuxième bague de fixation hors de la deuxième partie de conduit rigide.

Selon un mode de réalisation de l'invention, les deux premiers ergots de verrouillage sont configurés pour être rapprochés l'un de l'autre lorsqu'ils occupent la configuration de déverrouillage, et pour être éloignés l'un de l'autre lorsqu'ils occupent la configuration de verrouillage, et les deux deuxièmes ergots de verrouillage sont configurés pour être rapprochés l'un de l'autre lorsqu'ils occupent la configuration de déverrouillage, et pour être éloignés l'un de l'autre lorsqu'ils occupent la configuration de verrouillage.

Selon un mode de réalisation de l'invention, l'au moins un premier ergot de verrouillage est configuré pour libérer la première partie de conduit rigide lorsqu'une force de poussée, dirigée vers l'axe central du conduit flexible, est exercée par un utilisateur sur la première surface de préhension de l'au moins premier ergot de verrouillage, c'est-à-dire lorsque l'au moins un premier ergot de verrouillage est repoussé vers l'axe central du conduit flexible, et dans lequel l'au moins un deuxième ergot de verrouillage est configuré pour libérer la deuxième partie de conduit rigide lorsqu'une force de poussée, dirigée vers l'axe central du conduit flexible, est exercée par un utilisateur sur la deuxième surface de préhension de l'au moins deuxième ergot de verrouillage, c'est-à-dire lorsque l'au moins un deuxième ergot de verrouillage est repoussé vers l'axe central du conduit flexible.

Selon un mode de réalisation de l'invention, chacun de l'au moins un premier ergot de verrouillage et de l'au moins un deuxième ergot de verrouillage est accessible depuis l'extérieur du conduit d'aspirateur.

Selon un mode de réalisation de l'invention, la première partie de conduit rigide comporte au moins un premier orifice de verrouillage qui est configuré pour coopérer avec l'au moins un premier ergot de verrouillage lorsque l'au moins un premier ergot de verrouillage est dans la configuration de verrouillage, et la deuxième partie de conduit rigide comporte au moins un deuxième orifice de verrouillage qui est configuré pour coopérer avec l'au moins un deuxième ergot de verrouillage lorsque l'au moins un deuxième ergot de verrouillage est dans la configuration de verrouillage.

Selon un mode de réalisation de l'invention, l'au moins un premier orifice de verrouillage débouche dans une surface externe de la première partie de conduit rigide et est configuré pour permettre un accès à l'au moins un premier ergot de verrouillage depuis l'extérieur du conduit d'aspirateur et pour permettre un déplacement de l'au moins un premier ergot de verrouillage dans la configuration de déverrouillage, et l'au moins un deuxième orifice de verrouillage débouche dans une surface externe de la deuxième partie de conduit rigide et est configuré pour permettre un accès à l'au moins un deuxième ergot de verrouillage depuis l'extérieur du conduit d'aspirateur et pour permettre un déplacement de l'au moins un deuxième ergot de verrouillage dans la configuration de déverrouillage.

Selon un mode de réalisation de l'invention, l'au moins un premier orifice de verrouillage est configuré pour être situé en regard de l'au moins un premier ergot de verrouillage, lorsque la première bague de fixation est fixée à la première partie de conduit rigide, et l'au moins un deuxième orifice de verrouillage est configuré pour être situé en regard de l'au moins un deuxième ergot de verrouillage, lorsque la deuxième bague de fixation est fixée à la deuxième partie de conduit rigide.

Selon un mode de réalisation de l'invention, chacun de l'au moins un premier orifice de verrouillage et de l'au moins un deuxième orifice de verrouillage est oblong.

Selon un mode de réalisation de l'invention, l'au moins un premier orifice de verrouillage est prévu sur une portion latérale de la première partie de conduit rigide, et l'au moins un deuxième orifice de verrouillage est prévu sur une portion latérale de la deuxième partie de conduit rigide.

Selon un mode de réalisation de l'invention, l'au moins un premier ergot de verrouillage est configuré pour être accessible depuis un côté latéral de la première partie de conduit rigide, et l'au moins un deuxième ergot de verrouillage est configuré pour être accessible depuis un côté latéral de la deuxième partie de conduit rigide.

Selon un mode de réalisation de l'invention, la première partie de conduit rigide comporte une première portion de montage qui est tubulaire et qui est pourvue d'une première ouverture d'insertion, et la deuxième partie de conduit rigide comporte une deuxième portion de montage qui est tubulaire et qui est pourvue d'une deuxième ouverture d'insertion, la première bague de fixation étant configurée pour être insérée dans la première portion de montage via la première ouverture d'insertion et la deuxième bague de fixation étant configurée pour être insérée dans la deuxième portion de montage via la deuxième ouverture d'insertion.

Selon un mode de réalisation de l'invention, l'au moins un premier orifice de verrouillage est prévu sur la première portion de montage, et l'au moins un deuxième orifice de verrouillage est prévu sur la première portion de montage.

Selon un mode de réalisation de l'invention, la première partie de conduit rigide est configurée pour être reliée fluidiquement à un boîtier d'aspirateur équipé d'une unité d'aspiration, et la deuxième partie de conduit rigide est configurée pour être reliée fluidiquement à un suceur configuré pour être en contact avec un sol à nettoyer.

Selon un mode de réalisation de l'invention, le conduit d'aspirateur comporte un premier tube d'aspiration raccordé fluidiquement et mécaniquement à la première partie de conduit rigide, et un deuxième tube d'aspiration raccordé fluidiquement et mécaniquement à la deuxième partie de conduit rigide.

Selon un mode de réalisation de l'invention, le premier tube d'aspiration est configuré pour être raccordé fluidiquement et mécaniquement au boîtier d'aspirateur, et le deuxième tube d'aspiration est configuré pour être raccordé fluidiquement et mécaniquement au suceur.

Selon un mode de réalisation de l'invention, le dispositif d'articulation est configuré pour être situé au-dessus du conduit flexible lorsque le conduit d'aspirateur est en conditions normales d'utilisation. En d'autres termes, le dispositif d'articulation est configuré pour être orienté vers le haut, c'est-à-dire pour être directement visible par un utilisateur, lorsque le conduit d'aspirateur est en conditions normales d'utilisation. De façon avantageuse, l'axe d'articulation n'est pas sécant avec le conduit flexible.

Selon un mode de réalisation de l'invention, l'organe de verrouillage est monté pivotant sur l'une des première et deuxième parties de conduit rigides autour d'un axe de pivotement qui est sensiblement parallèle à l'axe d'articulation et est configuré pour pivoter entre une position de verrouillage dans laquelle l'organe de verrouillage est configuré pour coopérer avec l'autre des première et deuxième parties de conduit rigides de manière à verrouiller les première et deuxième parties de conduit rigides dans la configuration dépliée, et une position de libération dans laquelle l'organe de verrouillage est configuré pour libérer l'autre des première et deuxième parties de conduit rigides de manière à permettre un pivotement des première et deuxième parties de conduit rigides dans la configuration pliée.

Selon un mode de réalisation de l'invention, le conduit d'aspirateur comporte un organe d'actionnement solidaire en mouvement de l'organe de verrouillage et comportant une partie d'actionnement configurée pour être actionnée manuellement par un utilisateur, l'organe d'actionnement étant monté pivotant autour de l'axe de pivotement entre une position de repos et une position de déverrouillage, le conduit d'aspirateur étant configuré de telle sorte qu'un déplacement de l'organe d'actionnement de la position de repos à la position de déverrouillage entraîne un déplacement de l'organe de verrouillage de la position de verrouillage à la position de libération.

Selon un mode de réalisation de l'invention, l'organe de verrouillage et le dispositif d'articulation sont sensiblement diamétralement opposés par rapport à un axe longitudinal central du conduit d'aspirateur lorsque les première et deuxième parties de conduit rigides sont dans la configuration dépliée. Selon un tel mode de réalisation de l'invention, la partie d'actionnement pourrait être située du même côté que le dispositif d'articulation.

Selon un autre mode de réalisation de l'invention, l'organe de verrouillage et la partie d'actionnement sont sensiblement diamétralement opposés au dispositif d'articulation par rapport à un axe longitudinal central du conduit d'aspirateur lorsque les première et deuxième parties de conduit rigides sont dans la configuration dépliée.

Dans une configuration où le premier dispositif de verrouillage comporte deux premiers ergots de verrouillage qui sont diamétralement opposés par rapport à l'axe central du conduit flexible, et le deuxième dispositif de verrouillage comporte deux deuxièmes ergots de verrouillage qui sont diamétralement opposés par rapport à l'axe central du conduit flexible, lorsque les première et deuxième parties de conduit rigides sont dans la configuration dépliée, chacun des premiers et deuxièmes ergots de verrouillage est disposé sur un côté latéral du conduit d'aspirateur entre d'une part le dispositif d'articulation et d'autre part l'organe de verrouillage. Une telle configuration permet d'accéder facilement aux deux premiers et aux deux deuxièmes ergots de verrouillage sans être gêné par le dispositif d'articulation ou l'organe de verrouillage.

Une telle configuration des premier et deuxième dispositifs de verrouillage permet un démontage aisé du conduit flexible tout simplement en exerçant, avec le pouce et l'index d'une même main, successivement une pression sur les deux premiers éléments de verrouillage afin de les déplacer dans la configuration de déverrouillage et de pouvoir retirer la première bague de fixation hors de la première partie de conduit rigide, puis une pression sur les deux deuxièmes éléments de verrouillage afin de les déplacer dans la configuration de déverrouillage et de pouvoir retirer la deuxième bague de fixation hors de la deuxième partie de conduit rigide.

Selon un mode de réalisation de l'invention, l'organe de verrouillage et l'organe d'actionnement sont réalisés en une seule pièce. Une telle configuration du conduit d'aspirateur facilite l'assemblage du conduit d'aspirateur, et en diminue les coûts de fabrication.

La présente invention concerne en outre un aspirateur comportant :
- un boîtier d'aspirateur équipé d'une unité d'aspiration,
- un suceur configuré pour être en contact avec un sol à nettoyer, et
- un conduit d'aspirateur selon la présente invention, le conduit d'aspirateur reliant mécaniquement et fluidiquement le boîtier d'aspirateur au suceur.

### Brève description des figures

De toute façon l'invention sera bien comprise à l'aide de la description qui suit en référence aux dessins schématiques annexés représentant, à titre d'exemple non limitatif, une forme d'exécution de ce conduit d'aspirateur.
Figure 1 est une vue en perspective d'un aspirateur selon l'invention.
Figure 2 est une vue partielle en perspective de côté d'un conduit d'aspirateur appartenant à l'aspirateur de la figure 1, montrant le conduit d'aspirateur en configuration dépliée.
Figure 3 est une vue partielle de dessous du conduit d'aspirateur de la figure 2.
Figure 4 est une vue partielle de dessus du conduit d'aspirateur de la figure 2.
Figure 5 est une vue partielle en perspective de côté du conduit d'aspirateur de la figure 2, montrant le conduit d'aspirateur en configuration dépliée.
Figure 6 est une vue partielle en perspective de dessous du conduit d'aspirateur de la figure 2, montrant le conduit d'aspirateur en configuration dépliée.
Figure 7 est une vue partielle en perspective de dessus du conduit d'aspirateur de la figure 2.
Figure 8 est une vue en perspective d'un organe de verrouillage, d'un organe d'actionnement et d'un capot de recouvrement appartenant au conduit d'aspirateur de la figure 2.
Figure 9 est une vue de dessus de l'organe de verrouillage, de l'organe d'actionnement et du capot de recouvrement de la figure 8.
Figure 10 est une vue en perspective arrière de l'organe de verrouillage, de l'organe d'actionnement et du capot de recouvrement de la figure 8.
Figure 11 est une vue en perspective du conduit d'aspirateur de la figure 2, montrant le conduit d'aspirateur en configuration dépliée et un conduit flexible qui est retiré hors de première et deuxième partie de conduit rigides appartenant au conduit d'aspirateur.
Figure 12 est une vue en coupe longitudinale du conduit d'aspirateur de la figure 2, montrant l'organe de verrouillage en position de verrouillage.
Figure 13 est une vue en coupe longitudinale du conduit d'aspirateur de la figure 2, montrant le conduit d'aspirateur en configuration pliée.

### Description détaillée

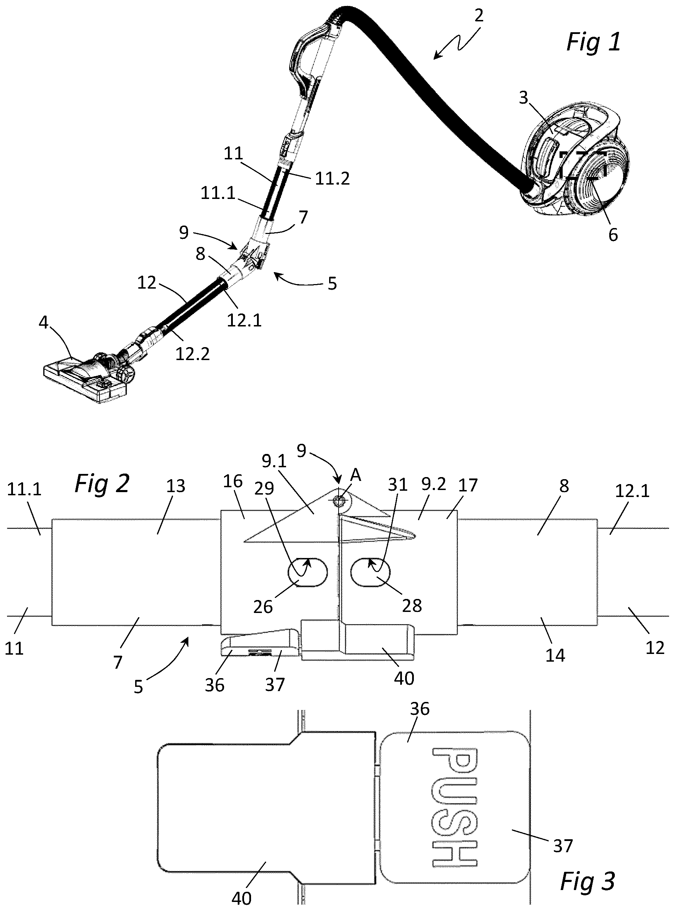

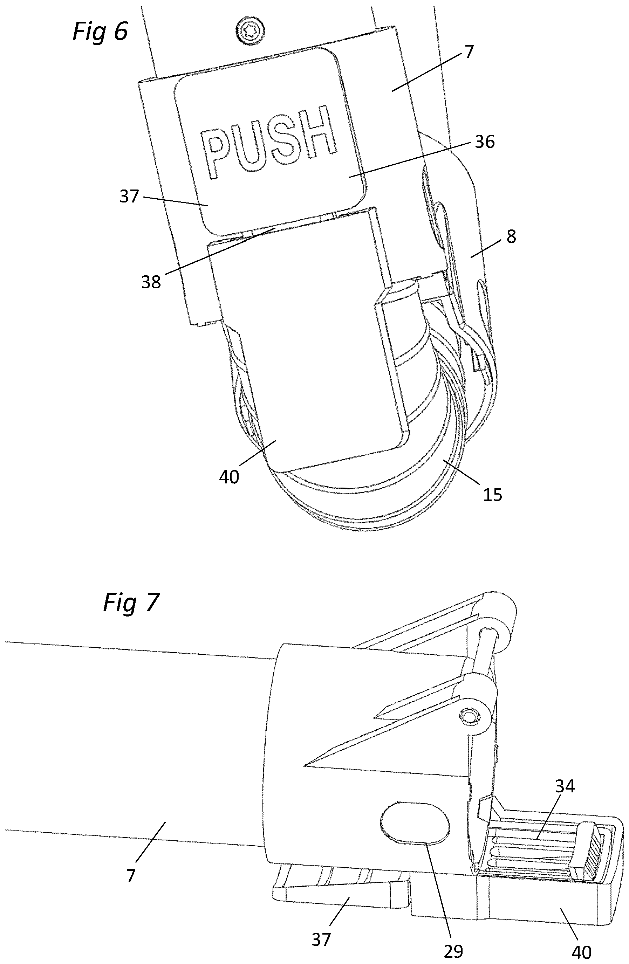

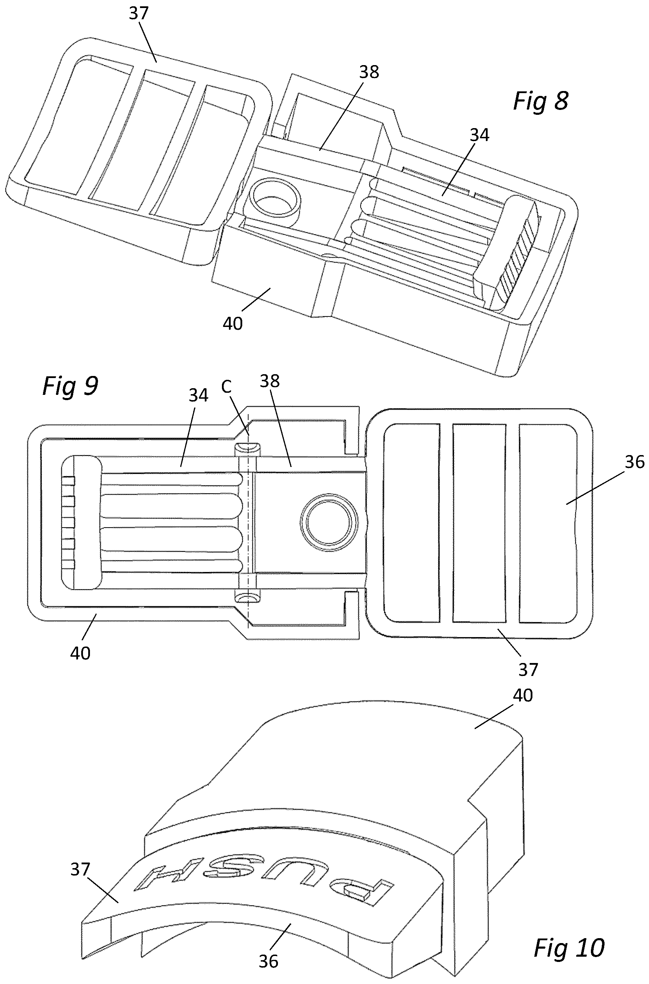

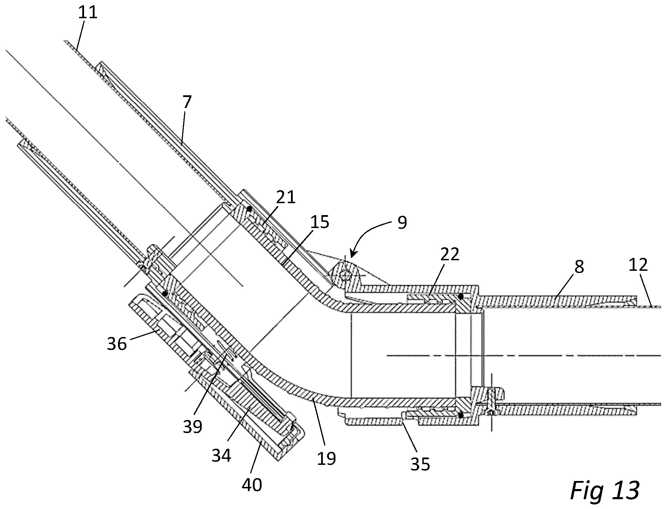

Les figures 1 à 13 représentent un aspirateur 2, et plus particulièrement un aspirateur traineau, qui comporte un boîtier d'aspirateur 3, un suceur 4 configuré pour être en contact avec un sol à nettoyer, et un conduit d'aspirateur 5 reliant fluidiquement et mécaniquement le boîtier d'aspirateur 3 au suceur 4. Le boîtier d'aspirateur 3 est équipé, de façon connue, notamment d'une unité d'aspiration 6 qui peut par exemple comporter un moto-ventilateur électrique, et d'un dispositif de séparation et de stockage de déchets.

Comme montré sur la figure 2, le conduit d'aspirateur 5 comprend une première partie de conduit rigide 7, une deuxième partie de conduit rigide 8, et un dispositif d'articulation 9 reliant les première et deuxième parties de conduit rigides 7, 8 entre elles.

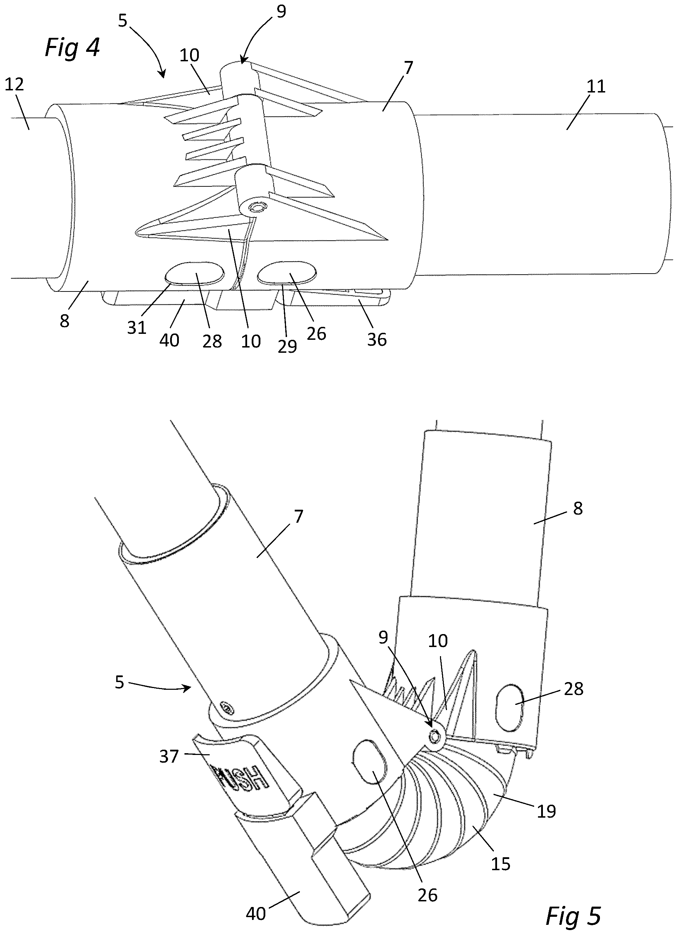

Le dispositif d'articulation 9 est configuré pour permettre un pivotement de la première partie de conduit rigide 7 par rapport à la deuxième partie de conduit rigide 8 autour d'un axe d'articulation A et entre une configuration dépliée (voir la figure 2) dans laquelle les première et deuxième parties de conduit rigides 7, 8 sont alignées l'une par rapport à l'autre et une configuration pliée (voir la figure 5) dans laquelle les première et deuxième parties de conduit rigides 7, 8 définissent entre elles un angle inférieur à 180°. De façon avantageuse, le dispositif d'articulation 9 est configuré pour être orienté vers le haut, c'est-à-dire pour faire face à un utilisateur, lorsque le conduit d'aspirateur 5 est en conditions normales d'utilisation, et est également configuré de telle sorte que l'axe d'articulation A n'est pas sécant avec les première et deuxième parties de conduit rigides 7, 8.

Selon le mode de réalisation représenté sur les figures, le dispositif d'articulation 9 comporte une première partie de charnière 9.1 fixée à une surface externe de la première partie de conduit rigide 7, et une deuxième partie de charnière 9.2 fixée à une surface externe de la deuxième partie de conduit rigide 8. De façon avantageuse, la deuxième partie de conduit rigide 8 comporte deux nervures de protection latérales 10 qui sont situées respectivement de part et d'autre de la deuxième partie de charnière 9.2 (voir les figures 4 et 5) et qui sont configurées pour éviter les pincements ou coincement d'objets extérieurs au niveau du dispositif d'articulation 9.

Le conduit d'aspirateur 5 comporte en outre un premier tube d'aspiration 11 comprenant une portion d'extrémité proximale 11.1 raccordée fluidiquement et mécaniquement à la première partie de conduit rigide 7, et une portion d'extrémité distale 11.2 configurée pour être raccordée fluidiquement et mécaniquement au boîtier d'aspirateur 3. Le conduit d'aspirateur 5 comporte également un deuxième tube d'aspiration 12 comprenant une portion d'extrémité proximale 12.1 raccordée fluidiquement et mécaniquement à la deuxième partie de conduit rigide 8, et une portion d'extrémité distale 12.2 configurée pour être raccordée fluidiquement et mécaniquement au suceur 4.

Selon le mode de réalisation représenté sur les figures, la première partie de conduit rigide 7 comporte une première portion de raccordement 13 qui est tubulaire et qui est raccordée fluidiquement et mécaniquement à la portion d'extrémité proximale 11.1 du premier tube d'aspiration 11, et la deuxième partie de conduit rigide 8 comporte une deuxième portion de raccordement 14 qui est tubulaire et qui est raccordée fluidiquement et mécaniquement à la portion d'extrémité proximale 12.1 du deuxième tube d'aspiration 12.

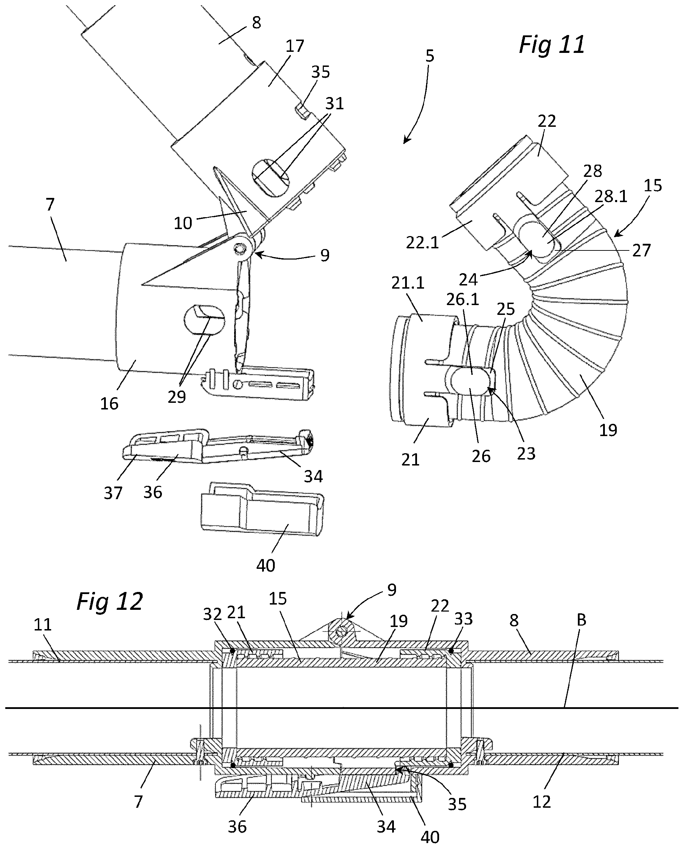

Comme montré plus particulièrement sur les figures 5 et 11, le conduit d'aspirateur 5 comporte de plus un conduit flexible 15 délimitant un passage d'écoulement interne et reliant les première et deuxième parties de conduit rigides 7, 8. Le conduit flexible 15 est plus particulièrement configuré pour relier fluidiquement les première et deuxième portions de raccordement 13, 14, de telle sorte que la première portion de raccordement 13, la deuxième portion de raccordement 14, les premier et deuxième tubes d'aspiration 11, 12 et le conduit flexible 15 définissent un passage d'écoulement d'air relié d'une part à l'unité d'aspiration 6 et d'autre part au suceur 4.

Selon le mode de réalisation représenté sur les figures, les première et deuxième parties de conduit rigides 7, 8 comportent respectivement des première et deuxième portions de montage 16, 17 qui sont tubulaires, et les première et deuxième portions de montage 16, 17 délimitent un logement de réception 18 dans lequel est monté le conduit flexible 15. De façon avantageuse, la première portion de montage 16 comporte une première ouverture d'insertion et la deuxième portion de montage 17 comporte une deuxième ouverture d'insertion qui est configurée pour être située en regard de la première ouverture d'insertion lorsque les première et deuxième parties de conduit rigides 7, 8 occupent la configuration dépliée.

Le conduit flexible 15 comporte plus particulièrement une partie tubulaire flexible 19, une première bague de fixation 21 qui est fixée à une première portion d'extrémité de la partie tubulaire flexible 19 et qui est configurée pour être fixée de manière amovible à la première portion de montage 16, et une deuxième bague de fixation 22 qui est fixée à une deuxième portion d'extrémité de la partie tubulaire flexible 19 et qui est configurée pour être fixée de manière amovible à la deuxième portion de montage 17. La première bague de fixation 21 est plus particulièrement configurée pour être insérée dans la première portion de montage 16 via la première ouverture d'insertion, et la deuxième bague de fixation 22 est plus particulièrement configurée pour être insérée dans la deuxième portion de montage 17 via la deuxième ouverture d'insertion. La première bague de fixation 21 comporte un premier corps de bague annulaire 21.1, et la deuxième bague de fixation 22 comporte un deuxième corps de bague annulaire 22.1.

Selon le mode de réalisation représenté sur les figures, la première bague de fixation 21 comporte un premier dispositif de verrouillage 23 configuré pour verrouiller, de manière réversible, la première bague de fixation 21 sur la première portion de montage 16, et la deuxième bague de fixation 22 comporte un deuxième dispositif de verrouillage 24 configuré pour verrouiller, de manière réversible, la deuxième bague de fixation 22 sur la deuxième portion de montage 17.

Le premier dispositif de verrouillage 23 comporte deux premières pattes élastiquement déformables 25 qui s'étendent depuis le premier corps de bague annulaire 21.1 et en direction de la deuxième bague de fixation 22. De façon avantageuse, les deux premières pattes élastiquement déformables 25 s'étendent chacune selon une direction d'extension qui est sensiblement parallèle à l'axe central du conduit flexible 15, et sont diamétralement opposées par rapport à l'axe central du conduit flexible 15. Chacune des premières pattes élastiquement déformables 25 est disposée le long d'une surface externe de la partie tubulaire flexible 19.

Le premier dispositif de verrouillage 23 comporte en outre deux premiers ergots de verrouillage 26 qui s'étendent respectivement depuis les extrémités libres des deux premières pattes élastiquement déformables 25, et qui sont donc diamétralement opposés. L'un des deux premiers ergots de verrouillage 26 est notamment visible sur la figure 11, tandis que l'autre des deux premiers ergots de verrouillage 26 est notamment visible sur la figure 4. De façon avantageuse, chaque premier ergot de verrouillage 26 s'étend radialement vers l'extérieur par rapport à l'axe central du conduit flexible 15, et est pourvu d'une première surface de préhension 26.1 orientée vers l'extérieur du conduit flexible 15 et apte à être contactée par un doigt d'un utilisateur.

Les deux premiers ergots de verrouillage 26 sont mobiles entre une configuration de verrouillage dans laquelle les deux premiers ergots de verrouillage 26 sont éloignés l'un de l'autre et sont configurés pour coopérer avec la première portion de montage 16 de manière à verrouiller la première bague de fixation 21 sur la première portion de montage 16, et une configuration de déverrouillage dans les deux premiers ergots de verrouillage 26 sont rapprochés l'un de l'autre et sont configurés pour libérer la première portion de montage 16 de manière à autoriser un retrait de la première bague de fixation 21 hors de la première portion de montage 16.

De façon similaire, le deuxième dispositif de verrouillage 24 comporte deux deuxièmes pattes élastiquement déformables 27 qui s'étendent depuis le deuxième corps de bague annulaire 22.1 et en direction de la première bague de fixation 21. De façon avantageuse, les deux deuxièmes pattes élastiquement déformables 27 s'étendent chacune selon une direction d'extension qui est sensiblement parallèle à l'axe central du conduit flexible 15, et sont diamétralement opposées par rapport à l'axe central du conduit flexible 15. Chacune des deuxièmes pattes élastiquement déformables 27 est disposée le long d'une surface externe de la partie tubulaire flexible 19.

Le deuxième dispositif de verrouillage 24 comporte en outre deux deuxièmes ergots de verrouillage 28 qui s'étendent respectivement depuis les extrémités libres des deux deuxièmes pattes élastiquement déformables 27, et qui sont donc diamétralement opposés. L'un des deux deuxièmes ergots de verrouillage 28 est notamment visible sur la figure 11, tandis que l'autre des deux deuxièmes ergots de verrouillage 28 est notamment visible sur la figure 4. De façon avantageuse, chaque deuxième ergot de verrouillage 28 s'étend radialement vers l'extérieur par rapport à l'axe central du conduit flexible 15, et est pourvu d'une deuxième surface de préhension 28.1 orientée vers l'extérieur du conduit flexible 15 et apte à être contactée par un doigt d'un utilisateur.

Les deux deuxièmes ergots de verrouillage 28 sont mobiles entre une configuration de verrouillage dans laquelle les deux deuxièmes ergots de verrouillage 28 sont éloignés l'un de l'autre et sont configurés pour coopérer avec la deuxième portion de montage 17 de manière à verrouiller la deuxième bague de fixation 22 sur la deuxième portion de montage 17, et une configuration de déverrouillage dans les deux deuxièmes ergots de verrouillage 28 sont rapprochés l'un de l'autre et sont configurés pour libérer la deuxième portion de montage 17 de manière à autoriser un retrait de la deuxième bague de fixation 22 hors de la deuxième portion de montage 17.

Selon un mode de réalisation de l'invention, chacune des premières et deuxièmes surfaces de préhension 26.1, 28.1 a une aire comprise entre 25 mm² et 600 mm², de préférence entre 50 mm² et 200 mm².

Chacun des premiers ergots de verrouillage 26 et des deuxièmes ergots de verrouillage 28 est configuré pour être accessible depuis l'extérieur du conduit d'aspirateur 5. Chaque premier ergot de verrouillage 26 est plus particulièrement configuré pour être accessible depuis un côté latéral respectif de la première partie de conduit rigide 7, et chaque deuxième ergot de verrouillage 28 est plus particulièrement configuré pour être accessible depuis un côté latéral respectif de la deuxième partie de conduit rigide 8.

De façon avantageuse, les premières surfaces de préhension 26.1 des deux premiers ergots de verrouillage 26, qui sont diamétralement opposés, forment une pince saisissable par exemple entre l'index et le pousse d'un utilisateur, et les deuxièmes surfaces de préhension 28.1 des deux deuxièmes ergots de verrouillage 28, qui sont diamétralement opposés, forment une pince saisissable par exemple entre l'index et le pousse d'un utilisateur.

Ainsi, chaque premier ergot de verrouillage 26 est configuré pour libérer la première partie de conduit rigide 7 lorsqu'une force de poussée, dirigée vers l'axe central du conduit flexible 15, est exercée par un utilisateur sur la première surface de préhension 26.1 respective, c'est-à-dire lorsque ledit premier ergot de verrouillage 26 est repoussé vers l'axe central du conduit flexible 15, et chaque deuxième ergot de verrouillage 28 est configuré pour libérer la deuxième partie de conduit rigide 8 lorsqu'une force de poussée, dirigée vers l'axe central du conduit flexible 15, est exercée par un utilisateur sur la deuxième surface de préhension 28.1 respective, c'est-à-dire lorsque ledit deuxième ergot de verrouillage 28 est repoussé vers l'axe central du conduit flexible 15.

Selon le mode de réalisation représenté sur les figures, la première partie de conduit rigide 7 comporte deux premiers orifices de verrouillage 29 qui sont prévus sur deux portions latérales respectives de la première portion de montage 16, et qui sont configurés pour coopérer respectivement avec les deux premiers ergots de verrouillage 26 lorsque ces derniers sont dans la configuration de verrouillage. De façon similaire, la deuxième partie de conduit rigide 8 comporte deux deuxièmes orifices de verrouillage 31 qui sont prévus sur deux portions latérales respectives de la deuxième portion de montage 17, et qui sont configurés pour coopérer respectivement avec les deux deuxièmes ergots de verrouillage 28 lorsque ces derniers sont dans la configuration de verrouillage.

Chaque premier orifice de verrouillage 29 est plus particulièrement traversant et débouche dans une surface externe de la première portion de montage 16, de manière à permettre un accès au premier ergot de verrouillage 26 respectif depuis l'extérieur du conduit d'aspirateur 5 et à permettre un déplacement du premier ergot de verrouillage 26 respectif dans la configuration de déverrouillage, et chaque deuxième orifice de verrouillage 31 est plus particulièrement traversant et débouche dans une surface externe de la deuxième portion de montage 17, de manière à permettre un accès au deuxième ergot de verrouillage 28 respectif depuis l'extérieur du conduit d'aspirateur 5 et à permettre un déplacement du deuxième ergot de verrouillage 28 respectif dans la configuration de déverrouillage.

Chaque premier orifice de verrouillage 29 est configuré pour être situé en regard du premier ergot de verrouillage 26 respectif, lorsque la première bague de fixation 21 est fixée à la première partie de conduit rigide 7, et chaque deuxième orifice de verrouillage 31 est configuré pour être situé en regard du deuxième ergot de verrouillage 28 respectif, lorsque la deuxième bague de fixation 22 est fixée à la deuxième partie de conduit rigide 8. Chacun des premiers orifices de verrouillage 29 et des deuxièmes orifices de verrouillage 31 peut par exemple être oblong.

Comme montré sur la figure 11, le conduit flexible 15 comporte en outre un premier joint d'étanchéité annulaire 32 fixé à la première bague de fixation 21 et configuré pour coopérer de manière étanche avec la première partie de conduit rigide 7, et un deuxième joint d'étanchéité annulaire 33 fixé à la deuxième bague de fixation 22 et configuré pour coopérer de manière étanche avec la deuxième partie de conduit rigide 8.

Le conduit d'aspirateur 5 comporte également un organe de verrouillage 34, tel qu'une patte de verrouillage ou un loquet de verrouillage équipé(e) d'un doigt de verrouillage, configuré pour verrouiller les première et deuxième parties de conduit rigides 7, 8 dans la configuration dépliée. De façon avantageuse, l'organe de verrouillage 34 et le dispositif d'articulation 9 sont sensiblement diamétralement opposés par rapport à un axe longitudinal central B du conduit d'aspirateur 5 en configuration dépliée des première et deuxième parties de conduit rigides 7, 8.

L'organe de verrouillage 34 est monté pivotant sur la première partie de conduit rigide 7 autour d'un axe de pivotement C qui est parallèle à l'axe d'articulation A et entre une position de verrouillage dans laquelle l'organe de verrouillage 34 est configuré pour coopérer avec un élément de verrouillage 35 (visible à la figure 11), tel qu'un orifice de verrouillage apte à recevoir au moins partiellement le doigt de verrouillage précité, prévu sur la deuxième partie de conduit rigide 8 de manière à verrouiller les première et deuxième parties rigides 8, 9 dans la configuration dépliée, et une position de libération dans laquelle l'organe de verrouillage 34 est configuré pour libérer l'élément de verrouillage 35 de manière à permettre un pivotement des première et deuxième parties de conduit rigides 7, 8 dans la configuration pliée.

Le conduit d'aspirateur 5 comporte en outre un organe d'actionnement 36 configuré pour déplacer l'organe de verrouillage 34 dans la position de libération. De façon avantageuse, l'organe de verrouillage 34 et l'organe d'actionnement 36 sont réalisés en une seule pièce, et l'organe d'actionnement 36 s'étend dans le prolongement de l'organe de verrouillage 34.

L'organe d'actionnement 36 est solidaire en mouvement de l'organe de verrouillage 34, et est donc monté pivotant autour de l'axe de pivotement C et entre une position de repos (voir la figure 2) et une position de déverrouillage. Le conduit d'aspirateur 5 est plus particulièrement configuré de telle sorte qu'un déplacement de l'organe d'actionnement 36 de la position de repos à la position de déverrouillage entraîne un déplacement de l'organe de verrouillage 34 de la position de verrouillage à la position de libération.

L'organe d'actionnement 36 comporte une partie d'actionnement 37 configurée pour être actionnée manuellement par un utilisateur, et une partie de liaison 38 reliant la partie d'actionnement 37 à l'organe de verrouillage 34. De façon avantageuse, la partie d'actionnement 37 et l'organe de verrouillage 34 sont situés sur un même côté du conduit d'aspirateur 5 qui est diamétralement opposé au côté du conduit d'aspirateur 5 où est situé le dispositif d'articulation 9, et la partie d'actionnement 37 et l'organe de verrouillage 34 sont sensiblement alignés selon une direction longitudinale.

Lorsque les première et deuxième parties de conduit rigides 7, 8 sont dans la configuration dépliée, chacun des premiers et deuxièmes ergots de verrouillage 26, 28 est disposé sur un côté latéral du conduit d'aspirateur 5 entre d'une part le dispositif d'articulation 9 et d'autre part l'organe de verrouillage 34. Une telle configuration permet d'accéder facilement aux deux premiers et aux deux deuxièmes éléments de verrouillage 25, 26 sans être gêné par le dispositif d'articulation 9 ou l'organe de verrouillage 34.

Le conduit d'aspirateur 5 comporte en outre un élément de sollicitation 39, tel qu'un ressort de sollicitation, configuré pour solliciter l'organe d'actionnement 36 dans la position de repos. Un tel élément de sollicitation 39 permet de définir une position de repos stable pour l'organe d'actionnement 36.

Le conduit d'aspirateur 5 comporte également un capot de recouvrement 40 qui est fixé à la première partie de conduit rigide 7 et qui est configurée pour s'étendre sous l'organe de verrouillage 34 et pour recouvrir intégralement la face inférieure de l'organe de verrouillage 34, c'est-à-dire la face de l'organe de verrouillage 34 qui est située à l'opposé de la première partie de conduit rigide 7. Le capot de recouvrement 40 est en particulier configuré pour recouvrir une portion d'extrémité distale de l'organe de verrouillage 34. De façon avantageuse, le capot de recouvrement 40 est également configuré pour recouvrir intégralement les bords latéraux de l'organe de verrouillage 34, et pour rendre inaccessible l'organe de verrouillage 34 lorsque les première et deuxième parties de conduit rigides 7, 8 occupent la configuration dépliée. Un tel capot de recouvrement 40 limite considérablement les risques de grippage de l'organe de verrouillage 34 et également les risques de pincement des doigts d'un utilisateur lors d'un pivotement de l'organe de verrouillage 34 entre la position de verrouillage et la position de libération.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Conduit flexible (15) définissant au moins partiellement un passage d'écoulement d'air et configuré pour relier une première partie de conduit rigide (7) et une deuxième partie de conduit rigide (8) d'un conduit d'aspirateur (5), le conduit flexible (15) comportant :
- une partie tubulaire flexible (19),
- une première bague de fixation (21) fixée à une première portion d'extrémité de la partie tubulaire flexible (19) et configurée pour être fixée de manière amovible à la première partie de conduit rigide (7),
- une deuxième bague de fixation (22) fixée à une deuxième portion d'extrémité de la partie tubulaire flexible (19) et configurée pour être fixée de manière amovible à la deuxième partie de conduit rigide (8),
la première bague de fixation (21) comporte un premier dispositif de verrouillage (23) configuré pour verrouiller, de manière réversible, la première bague de fixation (21) sur la première partie de conduit rigide (7), et la deuxième bague de fixation (22) comporte un deuxième dispositif de verrouillage (24) configuré pour verrouiller, de manière réversible, la deuxième bague de fixation (22) sur la deuxième partie de conduit rigide (8),
le premier dispositif de verrouillage (23) comprend au moins un premier ergot de verrouillage (26) qui s'étend vers l'extérieur du conduit flexible (15) et qui est pourvu d'une première surface de préhension (26.1) apte à être contactée par un doigt d'un utilisateur, et le deuxième dispositif de verrouillage (24) comprend au moins un deuxième ergot de verrouillage (28) qui s'étend vers l'extérieur du conduit flexible (15) et qui est pourvu d'une deuxième surface de préhension (28.1) apte à être contactée par un doigt de l'utilisateur.

2. Conduit flexible (15) selon la revendication 1, dans lequel chacun de l'au moins un premier ergot de verrouillage (26) et de l'au moins un deuxième ergot de verrouillage (28) est situé sur un côté latéral du conduit flexible (15).

3. Conduit flexible (15) selon la revendication 1 ou 2 dans lequel chacune des première et deuxième surfaces de préhension est orientée vers l'extérieur du conduit flexible (15).

4. Conduit flexible (15) selon l'une quelconque des revendications 1 à 3, dans lequel chacune des première et deuxième surfaces de préhension a une aire comprise entre 25 mm² et 600 mm².

5. Conduit flexible (15) selon l'une quelconque des revendications 1 à 4, dans lequel la première bague de fixation (21) comporte un premier corps de bague annulaire (21.1) et le premier dispositif de verrouillage (23) comprend au moins une première patte élastiquement déformable (25) qui s'étend depuis le premier corps de bague annulaire (21.1) en direction de la deuxième bague de fixation (22), et la deuxième bague de fixation (22) comporte un deuxième corps de bague annulaire (22.1) et le deuxième dispositif de verrouillage (24) comprend au moins une deuxième patte élastiquement déformable (27) qui s'étend depuis le deuxième corps de bague annulaire (22.1) en direction de la première bague de fixation (21), dans lequel l'au moins un premier ergot de verrouillage (26) s'étend depuis une extrémité libre de l'au moins une première patte élastiquement déformable (25) et l'au moins un deuxième ergot de verrouillage (28) s'étend depuis une extrémité libre de l'au moins une deuxième patte élastiquement déformable (27).

6. Conduit flexible (15) selon la revendication 5, dans lequel le premier dispositif de verrouillage (23) comprend deux premières pattes élastiquement déformables (25) qui s'étendent depuis le premier corps de bague annulaire (21.1) et deux premiers ergots de verrouillage (26) qui s'étendent respectivement depuis les extrémités libres des deux premières pattes élastiquement déformables (25), et le deuxième dispositif de verrouillage (24) comprend deux deuxièmes pattes élastiquement déformables (27) qui s'étendent depuis le deuxième corps de bague annulaire (22.1) et deux deuxièmes ergots de verrouillage (28) qui s'étendent respectivement depuis les extrémités libres des deux deuxièmes pattes élastiquement déformables (27).

7. Conduit flexible (15) selon la revendication 6, dans lequel les deux premiers ergots de verrouillage (26) sont diamétralement opposés par rapport à un axe central du conduit flexible (15), et les deux deuxièmes ergots de verrouillage (28) sont diamétralement opposés par rapport à l'axe central du conduit flexible (15).

8. Conduit flexible (15) selon l'une quelconque des revendications 1 à 7, lequel comporte un premier joint d'étanchéité annulaire (32) fixé à la première bague de fixation (21) et configuré pour coopérer de manière étanche avec la première partie de conduit rigide (7), et un deuxième joint d'étanchéité annulaire (33) fixé à la deuxième bague de fixation (22) et configuré pour coopérer de manière étanche avec la deuxième partie de conduit rigide (8).

9. Conduit d'aspirateur (5) définissant un passage d'écoulement d'air et comprenant :
- une première partie de conduit rigide (7) et une deuxième partie de conduit rigide (8),
- un conduit flexible (15) selon l'une quelconque des revendications précédentes,
- un dispositif d'articulation (9) reliant les première et deuxième parties de conduit rigides (7, 8) entre elles, le dispositif d'articulation (9) comportant un axe d'articulation (A) et étant configuré pour permettre un pivotement de la première partie de conduit rigide (7) par rapport à la deuxième partie de conduit rigide (8) autour de l'axe d'articulation (A) et entre une configuration dépliée dans laquelle les première et deuxième parties de conduit rigides (7, 8) sont sensiblement alignées l'une par rapport à l'autre et une configuration pliée dans laquelle les première et deuxième parties de conduit rigides (7, 8) définissent entre elles un angle inférieur à 180°,
- un organe de verrouillage (34) configuré pour verrouiller, de manière réversible, les première et deuxième parties de conduit rigides (7, 8) dans la configuration dépliée,
dans lequel la première bague de fixation (21) est configurée pour être fixée de manière amovible à la première partie de conduit rigide (7), et la deuxième bague de fixation (22) est configurée pour être fixée de manière amovible à la deuxième partie de conduit rigide (8).

10. Conduit d'aspirateur (5) selon la revendication 9, dans lequel l'au moins un premier ergot de verrouillage (26) est mobile entre une configuration de verrouillage dans laquelle l'au moins un premier ergot de verrouillage (26) est configuré pour coopérer avec la première partie de conduit rigide (7) de manière à verrouiller la première bague de fixation (21) sur la première partie de conduit rigide (7), et une configuration de déverrouillage dans lequel l'au moins un premier ergot de verrouillage (26) est configuré pour libérer la première partie de conduit rigide (7) de manière à autoriser un retrait de la première bague de fixation (21) hors de la première partie de conduit rigide (7), et dans lequel l'au moins un deuxième ergot de verrouillage (28) est mobile entre une configuration de verrouillage dans laquelle l'au moins un deuxième ergot de verrouillage (28) est configuré pour coopérer avec la deuxième partie de conduit rigide (8) de manière à verrouiller la deuxième bague de fixation (22) sur la deuxième partie de conduit rigide (8), et une configuration de déverrouillage dans lequel l'au moins un deuxième ergot de verrouillage (28) est configuré pour libérer la deuxième partie de conduit rigide (8) de manière à autoriser un retrait de la deuxième bague de fixation (22) hors de la deuxième partie de conduit rigide (8).

11. Conduit d'aspirateur (5) selon la revendication 10, dans lequel l'au moins un premier ergot de verrouillage (26) est configuré pour libérer la première partie de conduit rigide (7) lorsqu'une force de poussée, dirigée vers l'axe central du conduit flexible (15), est exercée par un utilisateur sur la première surface de préhension (26.1) de l'au moins premier ergot de verrouillage (26), et dans lequel l'au moins un deuxième ergot de verrouillage (28) est configuré pour libérer la deuxième partie de conduit rigide (8) lorsqu'une force de poussée, dirigée vers l'axe central du conduit flexible (15), est exercée par un utilisateur sur la deuxième surface de préhension (28.1) de l'au moins deuxième ergot de verrouillage (28).

12. Conduit d'aspirateur (5) selon la revendication 10 ou 11, dans lequel la première partie de conduit rigide (7) comporte au moins un premier orifice de verrouillage (29) qui est configuré pour coopérer avec l'au moins un premier ergot de verrouillage (26) lorsque l'au moins un premier ergot de verrouillage (26) est dans la configuration de verrouillage, et la deuxième partie de conduit rigide (8) comporte au moins un deuxième orifice de verrouillage (31) qui est configuré pour coopérer avec l'au moins un deuxième ergot de verrouillage (28) lorsque l'au moins un deuxième ergot de verrouillage (28) est dans la configuration de verrouillage.

13. Conduit d'aspirateur (5) selon l'une quelconque des revendications 9 à 12, dans lequel l'au moins un premier ergot de verrouillage (26) est configuré pour être accessible depuis un côté latéral de la première partie de conduit rigide (7), et l'au moins un deuxième ergot de verrouillage (28) est configuré pour être accessible depuis un côté latéral de la deuxième partie de conduit rigide (8).

14. Aspirateur (2) comportant :
- un boîtier d'aspirateur (3) équipé d'une unité d'aspiration,
- un suceur (4) configuré pour être en contact avec un sol à nettoyer, et
- un conduit d'aspirateur (5) selon l'une quelconque des revendications 9 à 13, le conduit d'aspirateur (5) reliant mécaniquement et fluidiquement le boîtier d'aspirateur (3) au suceur (4).
